# EUROPEAN PATENT APPLICATION

(11) **EP 4 475 246 A1**
(43) Date of publication of application: **11.12.2024**
(21) Application number: 22924585.7
(22) Date of filing: 01.02.2022
(51) Int. Cl.: H01M 10/052, H01M 10/0562, H01M 10/0585

(54) **SECONDARY BATTERY**

(71) Applicant: NISSAN MOTOR CO., LTD., Kanagawa 221-0023 (JP); Renault s.a.s, 92100 Boulogne Billancourt (FR)
(72) Inventor: OGIHARA, Wataru, Atsugi-shi, Kanagawa 243-0123 (JP); ITO, Atsushi, Atsugi-shi, Kanagawa 243-0123 (JP); ONO, Masaki, Atsugi-shi, Kanagawa 243-0123 (JP)
(74) Representative: Grünecker Patent- und Rechtsanwälte PartG mbB
(86) International application number: PCT/IB2022/000057
(87) International publication number: WO 2023/148515

(57) **Abstract**

[Problem] To provide a means capable of reducing the internal resistance of a secondary battery having a solid electrolyte layer.

[Solution] In a secondary battery having a solid electrolyte layer, a phosphorus-containing solid electrolyte containing Li element, P element and S element is to be contained into a positive electrode active material layer, a solid electrolyte layer or a negative electrode active material layer, and a particle of the phosphorus-containing solid electrolyte is to be linked to one or more of another particle of the phosphorus-containing solid electrolyte, a conductive aid which can be contained in an electrode active material layer, a current collector, an electrode active material or a negative electrode protecting layer.

## Description

### TECHNICAL FIELD

The present invention relates to a secondary battery.

### BACKGROUND ART

In recent years, in order to cope with global warming, reduction of the amount of carbon dioxide has been strongly desired. In the automobile industry, expectations have been focused on reduction of carbon dioxide emissions by introduction of electric vehicles (EVs) and hybrid electric vehicles (HEVs), and development of a non-aqueous electrolyte secondary battery such as a secondary battery for driving motors, which is the key to its practical application, has been actively conducted.

A secondary battery for driving motors is required to have extremely high output characteristics and high energy as compared with a lithium ion secondary battery for consumer use used in a mobile phone, a notebook computer, and the like. Therefore, among all practical batteries, a lithium secondary battery having the highest theoretical energy has attracted attention, and is currently being rapidly developed.

Here, in a liquid lithium ion secondary battery that is currently widely used, a combustible organic electrolyte solution is used as an electrolyte. In such a liquid lithium ion secondary battery, safety measures against liquid leakage, a short circuit, overcharge, and the like are more strictly required than in other batteries.

Therefore, in recent years, research and development on an all-solid-state battery such as an all-solid-state lithium secondary battery in which an oxide-based or sulfide-based solid electrolyte is used as an electrolyte have been actively conducted. The solid electrolyte is a material mainly made of an ion conductor capable of ion conduction in a solid. Therefore, in an all-solid-state lithium secondary battery, in principle, various problems caused by a combustible organic electrolyte solution do not occur unlike a conventional liquid lithium ion secondary battery. Further, in general, when a positive electrode material having a high potential and a large capacity and a negative electrode material having a large capacity are used, the power density and the energy density of the battery can be significantly improved. An all-solid-state lithium secondary battery in which a sulfur simple substance (S) or a sulfide-based material is used as a positive electrode active material is a promising candidate.

Meanwhile, WO 2013/146916 A discloses a technique for improving cycle durability of an all-solid-state secondary battery at a high temperature. Specifically, the above-mentioned gazette discloses that in an electrode for an all-solid-state secondary battery in which an electrode mixture layer containing a binder, an inorganic solid electrolyte containing a sulfur atom and an electrode active material is bonded to a current collector via a conductive adhesive layer, a binder for an adhesive layer formed of a conductive particle and a diene-based polymer having a predetermined iodine value and a predetermined diene-based monomer unit content is incorporated in the conductive adhesive layer, and a sulfur atom contained in the inorganic solid electrolyte in the electrode mixture layer and a carbon-carbon double bond of the diene-based polymer are crosslinked.

### SUMMARY OF INVENTION

### Technical Problem

However, according to the study of the present inventors, it has been found that the internal resistance of a battery increases in some cases even if the technique described in WO 2013/146916 A is adopted. That is, in the technique disclosed in the above gazette, when a sulfur simple substance is used as an electrode active material contained in an electrode mixture layer, the sulfur simple substance also participates in a crosslinking reaction. As a result, ion conduction between sulfur and a solid electrolyte is inhibited, and the internal resistance of a battery increases.

Therefore, an object of the present invention is to provide a means capable of reducing the internal resistance of a battery in a secondary battery including a solid electrolyte layer.

### Solution to Problem

According to an aspect of the present invention, there is provided a secondary battery including a power generating element formed by laminating a positive electrode active material layer that is disposed on a surface of a positive electrode current collector and that contains a positive electrode active material and optionally a first conductive aid, a negative electrode active material layer that is disposed on a surface of a negative electrode current collector and that contains a negative electrode active material and optionally a second conductive aid, a solid electrolyte layer interposed between the positive electrode active material layer and the negative electrode active material layer, and a negative electrode protecting layer that is optionally disposed and that is interposed between the solid electrolyte layer and the negative electrode active material layer. Further, the secondary battery is characterized in that the positive electrode active material layer, the solid electrolyte layer, or the negative electrode active material layer contains a phosphorus-containing solid electrolyte containing Li element, P element, and S element, and a particle of the phosphorus-containing solid electrolyte is linked to one or more selected from a group consisting of another particle of a phosphorus-containing solid electrolyte, the first conductive aid, the second conductive aid, the positive electrode current collector, the negative electrode current collector, the positive electrode active material, the negative electrode active material, and the negative electrode protecting layer via a bond containing one or more selected from a group consisting of a -P-O- bond, a -P-S- bond, and a -P-N- bond.

### BRIEF DESCRIPTION OF DRAWINGS

Fig. 1 is a perspective view illustrating an appearance of a flat laminate type all-solid-state lithium secondary battery as one embodiment of a secondary battery according to the present invention.
Fig. 2 is a cross-sectional view taken along line 2-2 illustrated in Fig. 1.
Fig. 3 is a perspective view of a laminate type secondary battery according to an embodiment of the present invention.
Fig. 4 is a side view as viewed from direction A illustrated in Fig. 3.
Fig. 5 is a solid ³¹P-NMR spectrum of the positive electrode active material layer of the evaluation cell produced in Comparative Example 1 described later.
Fig. 6 is an enlarged view of the solid ³¹P-NMR spectrum shown in Fig. 5.
Fig. 7 is a solid ³¹P-NMR spectrum of the positive electrode active material layer of the evaluation cell produced in Example 1 described later.
Fig. 8 is an enlarged view of the solid ³¹P-NMR spectrum shown in Fig. 7.
Fig. 9 is a solid ³¹P-NMR spectrum of the positive electrode active material layer of the evaluation cell produced in Example 2 described later.
Fig. 10 is a ¹H-NMR spectrum of ethanol.
Fig. 11 is a ¹H-NMR spectrum of the positive electrode active material layer of the evaluation cell produced in Comparative Example 2 described later.
Fig. 12 is a ¹H-NMR spectrum of the positive electrode active material layer of the evaluation cell produced in Example 2 described later.

### DESCRIPTION OF EMBODIMENTS

An aspect of the present invention is a secondary battery, including a power generating element formed by laminating a positive electrode active material layer that is disposed on a surface of a positive electrode current collector and that contains a positive electrode active material and optionally a first conductive aid, a negative electrode active material layer that is disposed on a surface of a negative electrode current collector and that contains a negative electrode active material and optionally a second conductive aid, a solid electrolyte layer interposed between the positive electrode active material layer and the negative electrode active material layer; and a negative electrode protecting layer that is optionally disposed and that is interposed between the solid electrolyte layer and the negative electrode active material layer, in which the positive electrode active material layer, the solid electrolyte layer, or the negative electrode active material layer contains a phosphorus-containing solid electrolyte containing Li element, P element, and S element, and a particle of the phosphorus-containing solid electrolyte is linked to one or more selected from a group consisting of another particle of a phosphorus-containing solid electrolyte, the first conductive aid, the second conductive aid, the positive electrode current collector, the negative electrode current collector, the positive electrode active material, the negative electrode active material, and the negative electrode protecting layer via a bond containing one or more selected from a group consisting of a -P-O- bond, a -P-S- bond, and a -P-N- bond. According to the secondary battery according to the present invention, in the secondary battery including the solid electrolyte layer, the internal resistance of the battery can be reduced.

Hereinafter, the above-mentioned present aspect will be described with reference to the drawings, but the technical scope of the present invention should be determined on the basis of the description of the claims, and is not limited only to the following embodiments. The dimensional proportions in the drawings are exaggerated for convenience of description, and may be different from the actual proportions.

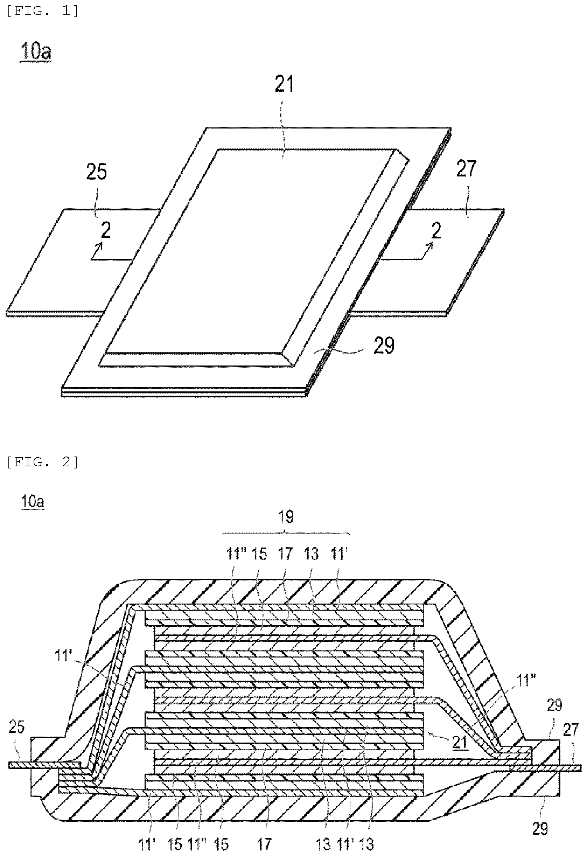

Fig. 1 is a perspective view illustrating an appearance of a flat laminate type all-solid-state lithium secondary battery as one embodiment of the secondary battery according to the present invention. Fig. 2 is a cross-sectional view taken along line 2-2 illustrated in Fig. 1. In the present description, a flat laminate type non-bipolar lithium secondary battery (hereinafter also simply referred to as a "laminate type battery") illustrated in Figs. 1 and 2 will be described in detail as an example. However, the lithium secondary battery according to the present aspect may be a bipolar (internal series connection type) battery.

As shown in Fig. 1, a laminate type battery 10a has a rectangular flat shape, and a negative electrode current collecting plate 25 and a positive electrode current collecting plate 27 for extracting electric power are drawn out from both sides thereof. A power generating element 21 is wrapped with a battery exterior material (laminate film 29) of the laminate type battery 10a, and the periphery thereof is thermally fused, and the power generating element 21 is sealed in a state where the negative electrode current collecting plate 25 and the positive electrode current collecting plate 27 are drawn to the outside.

As shown in Fig. 2, the laminate type battery 10a of the present embodiment has a structure in which the power generating element 21, which has a flat and substantially rectangular shape, and in which a charge-discharge reaction actually proceeds, is sealed inside the laminate film 29 which is a battery outer casing material. Here, the power generating element 21 has a configuration in which a positive electrode, a solid electrolyte layer 17, and a negative electrode are laminated. The positive electrode has a structure in which a positive electrode active material layer 15 containing a positive electrode active material is disposed on both surfaces of a positive electrode current collector 11". The negative electrode has a structure in which a negative electrode active material layer 13 containing a negative electrode active material is disposed on both surfaces of a negative electrode current collector 11'. Specifically, the positive electrode, the solid electrolyte layer, and the negative electrode are laminated in this order such that one positive electrode active material layer 15 and the negative electrode active material layer 13 adjacent thereto face each other via the solid electrolyte layer 17. Thereby, the adjacent positive electrode, solid electrolyte layer, and negative electrode constitute one single battery layer 19. Therefore, it can also be said that the laminate type battery 10a shown in Fig. 1 has a configuration in which a plurality of single battery layers 19 are laminated to be electrically connected in parallel.

The negative electrode current collector 11' and the positive electrode current collector 11" have a structure in which the negative electrode current collecting plate (tab) 25 and the positive electrode current collecting plate (tab) 27 which are electrically connected to the respective electrodes (the positive electrode and the negative electrode) are attached respectively, and led out to the outside of the laminate film 29 which is a battery outer casing material so as to be sandwiched between end portions of the laminate film 29. The positive electrode current collecting plate 27 and the negative electrode current collecting plate 25 may be attached to the positive electrode current collector 11" and the negative electrode current collector 11' of the respective electrodes via a positive electrode lead and a negative electrode lead (not illustrated), respectively, by ultrasonic welding, resistance welding, or the like as necessary.

Hereinafter, main constituent members of the lithium secondary battery according to the present aspect will be described.

### [Current collector]

A current collector has a function of mediating transfer of electrons from an electrode active material layer. The material constituting the current collector is not particularly limited. As a constituent material of the current collector, for example, a metal or a resin having an electrical conduction property can be adopted.

### [Solid electrolyte layer]

In the secondary battery according to the present aspect, the solid electrolyte layer is interposed between the positive electrode active material layer and the negative electrode active material layer and essentially contains a solid electrolyte. A specific form of the solid electrolyte contained in the solid electrolyte layer is not particularly limited. Examples of the solid electrolyte include a sulfide solid electrolyte and an oxide solid electrolyte, but it is preferably a sulfide solid electrolyte from the viewpoint that a higher ion conductivity is obtained.

Examples of the sulfide solid electrolyte include LiI-Li₂S-SiS₂, LiI-Li₂S-P₂O₅, LiI-Li₃PO₄-P₂S₅, Li₂S-P₂S₅, LiI-Li₃PS₄, LiI-LiBr-Li₃PS₄, Li₃PS₄, Li₂S-P₂S₅, Li₂S-P₂S₅-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (provided that m and n are positive numbers, and Z is any of Ge, Zn, and Ga), Li₂S-GeS₂, Li₂S-SiS₂-Li₃PO₄, Li₂S-SiS₂-LiₓMO_{y} (provided that x and y are positive numbers, and M is any of P, Si, Ge, B, Al, Ga, and In), and the like. The description of "Li₂S-P₂S₅" means a sulfide solid electrolyte obtained using a raw material composition containing Li₂S and P₂S₅, and the same applies to other descriptions.

The sulfide solid electrolyte, for example, may have a Li₃PS₄ skeleton, may have a Li₄P₂S₇ skeleton, or may have a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. Examples of the sulfide solid electrolyte having a Li₄P₂S₇ skeleton include a Li-P-S-based solid electrolyte called LPS (for example, Li₇P₃S₁₁). Further, as the sulfide solid electrolyte, for example, LGPS represented by Li₍₄₋ₓ₎Ge₍₁₋ₓ₎PₓS₄ (x satisfies 0 < x < 1) or the like may be used. Above all, the sulfide solid electrolyte is preferably a sulfide solid electrolyte containing P element, and the sulfide solid electrolyte is more preferably a material containing Li₂S-P₂S₅ as a main component. Further, the sulfide solid electrolyte may contain a halogen (F, Cl, Br, or I) . Examples of the sulfide solid electrolyte containing a halogen include argyrodite-type solid electrolytes (Li₆PS₅Cl and LiPS₅Br), which are also materials that can be preferably used.

When the sulfide solid electrolyte is a Li₂S-P₂S₅-based sulfide solid electrolyte, the ratio of Li₂S and P₂S₅ in molar ratio is preferably in the range of Li₂S : P₂S₅ = 50 : 50 to 100 : 0, and particularly preferably Li₂S : P₂S₅ = 70 : 30 to 80 : 20.

In addition, the sulfide solid electrolyte may be sulfide glass, crystallized sulfide glass, or a crystalline material obtained by a solid phase method. The sulfide glass can be obtained, for example, by subjecting a raw material composition to mechanical milling (ball milling or the like). Further, the crystallized sulfide glass can be obtained, for example, by subjecting the sulfide glass to a heat treatment at a temperature equal to or higher than the crystallization temperature. In addition, the ion conductivity (for example, Li ion conductivity) of the sulfide solid electrolyte at normal temperature (25°C) is, for example, preferably 1 × 10⁻⁵ S/cm or more, and more preferably 1 × 10⁻⁴ S/cm or more. The value of the ion conductivity of the solid electrolyte can be measured by an AC impedance method.

The content of the solid electrolyte in the solid electrolyte layer is, for example, preferably in the range of 10 to 100% by mass, more preferably in the range of 50 to 100% by mass, and still more preferably in the range of 90 to 100% by mass with respect to the total mass of the solid electrolyte layer. The solid electrolyte layer may further contain a binder in addition to the solid electrolyte described above.

The thickness of the solid electrolyte layer varies depending on the configuration of the intended secondary battery, but is preferably 600 um or less, more preferably 500 um or less, and still more preferably 400 um or less from the viewpoint that the volume energy density of the battery can be improved. Meanwhile, the lower limit value of the thickness of the solid electrolyte layer is not particularly limited, but is preferably 10 um or more, more preferably 50 um or more, and still more preferably 80 um or more.

### [Negative electrode (negative electrode active material layer)]

In the secondary battery according to the present aspect, the negative electrode active material layer 13 contains a negative electrode active material. The type of the negative electrode active material is not particularly limited, and examples thereof include a carbon material, a metal oxide, and a metal active material. The negative electrode active material preferably contains a carbon material, metallic lithium, a silicon-based negative electrode active material, or a tin-based negative electrode active material, and particularly preferably contains a carbon material or metallic lithium.

Examples of the shape of the negative electrode active material include a particulate shape (a spherical shape, a fibrous shape) a thin film shape, and the like. When the negative electrode active material is in a particulate shape, the average particle diameter (D₅₀) thereof is, for example, preferably in the range of 1 nm to 100 um, more preferably in the range of 10 nm to 50 µm, still more preferably in the range of 100 nm to 20 µm, and particularly preferably in the range of 1 to 20 µm. In the present description, the value of the average particle diameter (D₅₀) of the active material can be measured by a laser diffraction scattering method.

The content of the negative electrode active material in the negative electrode active material layer is not particularly limited, but is, for example, preferably in the range of 40 to 99% by mass, and more preferably in the range of 50 to 90% by mass.

The negative electrode active material layer preferably further contains a solid electrolyte. When the negative electrode active material layer contains a solid electrolyte, the ion conduction property of the negative electrode active material layer can be improved. The specific form of the solid electrolyte contained in the negative electrode active material layer is not particularly limited, and the examples and preferred forms described in the section of the solid electrolyte layer are similarly adopted. The content of the solid electrolyte in the negative electrode active material layer is, for example, preferably in the range of 1 to 60% by mass, and more preferably in the range of 10 to 50% by mass.

The negative electrode active material layer may further contain at least one of a binder and a conductive aid (in the present description, also referred to as a "second conductive aid") in addition to the negative electrode active material and the solid electrolyte described above. Here, a specific form of the binder that can be contained in the negative electrode active material layer is not particularly limited, and conventionally known knowledge can be referred to. Examples of the conductive aid include metals such as aluminum, stainless steel (SUS), silver, gold, copper, and titanium, alloys or metal oxides containing these metals; and carbon such as carbon fibers (specifically, vapor grown carbon fibers (VGCFs), polyacrylonitrile-based carbon fibers, pitch-based carbon fibers, rayon-based carbon fibers, activated carbon fibers, and the like), carbon nanotubes (CNTs), carbon black (specifically, acetylene black, Ketjen black (registered trademark), furnace black, channel black, thermal lamp black, and the like), but are not limited thereto. Among these conductive aids, only one type may be used alone or two or more types may be used in combination.

The thickness of the negative electrode active material layer varies depending on the configuration of the intended all-solid-state battery, but is, for example, preferably in the range of 0.1 to 1000 µm.

### [Negative electrode protecting layer]

In the secondary battery according to the present aspect, a negative electrode protecting layer may be provided between the solid electrolyte layer and the negative electrode active material layer. The negative electrode protecting layer prevents a reaction between the negative electrode active material layer and the solid electrolyte. Therefore, by providing the negative electrode protecting layer, it is possible to prevent deterioration of the solid electrolyte and a decrease in battery capacity caused by the reaction between the negative electrode active material layer and the solid electrolyte without hindering the progress of the battery reaction.

The constituent material of the negative electrode protecting layer is not particularly limited, and various materials capable of exhibiting the above-mentioned function can be adopted. Examples of the constituent material of the negative electrode protecting layer include nanoparticles having lithium-ion conduction property. When the negative electrode protecting layer contains the nanoparticles, a secondary battery particularly excellent in the function of the negative electrode protecting layer can be provided. Here, the "nanoparticles" mean particles having an average particle diameter on a nanometer scale (nm). The "average particle diameter" of nanoparticles refers to a 50% cumulative diameter (D50) with respect to a particle diameter (a maximum distance among distances between any two points on the contour line of an observed particle) measured by observing a cross section of a layer containing nanoparticles with a scanning electron microscope (SEM). The average particle diameter of the nanoparticles is preferably 500 nm or less, more preferably 300 nm or less, still more preferably 150 nm or less, particularly preferably 100 nm or less, and most preferably 60 nm or less. In particular, when the average particle diameter of the nanoparticles is 60 nm or less, a secondary battery particularly excellent in the effect of preventing a reaction between layers can be provided. The lower limit value of the average particle diameter of the nanoparticles is not particularly limited, but is usually 10 nm or more, and preferably 20 nm or more.

Such nanoparticles preferably contain, for example, one or two or more elements selected from the group consisting of carbon, gold, platinum, palladium, silicon, silver, aluminum, bismuth, tin, and zinc, and more preferably are made of one or two or more of simple substances or alloys of these elements from the viewpoint of being particularly excellent in the function as the negative electrode protecting layer. When the negative electrode protecting layer contains such nanoparticles, the layer may further contain a binder. The average thickness of the negative electrode protecting layer is not particularly limited, and the negative electrode protecting layer may be disposed at a thickness capable of exhibiting the above-mentioned function. However, when the average thickness of the negative electrode protecting layer is too large, the internal resistance is increased, which causes a decrease in charge-discharge efficiency. Therefore, the average thickness of the negative electrode protecting layer is preferably smaller than the average thickness of the solid electrolyte layer. In addition, when the average thickness of the negative electrode protecting layer is too small, there is a possibility that the effect of preventing the reaction by providing the negative electrode protecting layer cannot be sufficiently obtained. From these viewpoints, the average thickness of the negative electrode protecting layer is preferably 300 nm to 20 um, more preferably 500 nm to 15 µm, and still more preferably 1 to 10 µm.

### [Positive electrode active material layer]

In the secondary battery according to the present aspect, the positive electrode active material layer 15 contains a positive electrode active material. Here, a specific form of the positive electrode active material is not particularly limited, and conventionally known knowledge can be appropriately referred to. Above all, the positive electrode active material layer preferably contains a sulfur-containing positive electrode active material. The type of the sulfur-containing positive electrode active material is not particularly limited, but examples thereof include a particle or a thin film of an organic sulfur compound or an inorganic sulfur compound in addition to the sulfur simple substance (S), and any material may be used as long as the material can release a lithium ion during charging and occlude a lithium ion during discharging by utilizing the redox reaction of sulfur. In addition, the positive electrode active material layer may contain a sulfur-free positive electrode active material in place of or in addition to the sulfur-containing positive electrode active material. Examples of the sulfur-free positive electrode active material include layered rock salt-type active materials such as LiCoO₂, LiMnO₂, LiNiO₂, LiVO₂, and Li(Ni-Mn-Co)O₂, spinel-type active materials such as LiMn₂O₄ and LiNi_{0.5}Mn_{1.5}O₄, olivine-type active materials such as LiFePO₄ and LiMnPO₄, Si-containing active materials such as Li₂FeSiO₄ and Li₂MnSiO₄, and the like. Further, examples of the oxide active material other than those described above include Li₄Ti₅O₁₂.

Examples of the shape of the positive electrode active material include a particulate shape (a spherical shape, a fibrous shape) a thin film shape, and the like. When the positive electrode active material has a particulate shape, the average particle diameter (D₅₀) thereof is, for example, preferably in the range of 1 nm to 100 um, more preferably in the range of 10 nm to 50 um, still more preferably in the range of 100 nm to 20 um, and particularly preferably in the range of 1 to 20 um. In the present description, the value of the average particle diameter (D₅₀) of the active material can be measured by a laser diffraction scattering method.

The content of the positive electrode active material in the positive electrode active material layer is not particularly limited, but is, for example, preferably in the range of 40 to 99% by mass, and more preferably in the range of 50 to 90% by mass. It is also preferable that the positive electrode active material layer further contains a solid electrolyte. The specific form of the solid electrolyte contained in the positive electrode active material layer is not particularly limited, and the examples and preferred forms described in the section of the solid electrolyte layer are similarly adopted. The content of the solid electrolyte in the positive electrode active material layer is, for example, preferably in the range of 1 to 60% by mass, and more preferably in the range of 10 to 50% by mass. The positive electrode active material layer can also further contain a conductive aid (in the present description, also referred to as a "first conductive aid") and/or a binder.

### [Characteristics of secondary battery]

One of the characteristics of the secondary battery according to the present aspect is that the above-mentioned positive electrode active material layer, solid electrolyte layer, or negative electrode active material layer contains a phosphorus-containing solid electrolyte containing Li element, P element, and S element. In addition, another characteristic is that a particle of the phosphorus-containing solid electrolyte is linked to one or more selected from a group consisting of another particle of a phosphorus-containing solid electrolyte, the first conductive aid that can be contained in the positive electrode active material layer, the second conductive aid that can be contained in the negative electrode active material layer, the positive electrode current collector, the negative electrode current collector, the positive electrode active material, the negative electrode active material, and the negative electrode protecting layer via a bond containing one or more selected from a group consisting of a -P-O- bond, a -P-S- bond, and a -P-N- bond. With such a configuration, in the secondary battery according to the present aspect, an effect of effectively reducing the internal resistance can be obtained. This is considered to be because, due to the presence of the linkage (crosslinked structure) as described above, peeling between a particle of the phosphorus-containing solid electrolyte and the member linked to the particle is prevented, or stress generated by expansion and contraction of active material particles is relaxed by the flexible linkage (crosslinked structure).

A specific form of the phosphorus-containing solid electrolyte containing Li element, P element, and S element is not particularly limited. However, the phosphorus-containing solid electrolyte preferably contains a lithium ion (Li⁺) as a cation, and contains PS₄³⁻, P₂S₇⁴⁻, or P₂S₆³⁻ as an anion. Examples of such a phosphorus-containing solid electrolyte include the sulfide solid electrolyte described above as one that can be contained in the solid electrolyte layer. Use of such a phosphorus-containing solid electrolyte makes it easy for a reaction for linking phosphorus (P) contained in the electrolyte and another member to proceed effectively.

In the course of development of a secondary battery in which a solid electrolyte is used, the present inventors attempted to dissolve a phosphorus-containing solid electrolyte in ethanol and impregnate an electrode with the solution. As a result, the present inventors have accidentally found that ethanol reacts with the phosphorus-containing solid electrolyte, and a P-S bond contained in the electrolyte is substituted with a phosphate ester (P-O-CH₂-) bond. Then, based on the finding, it has been verified that the effect as described can be obtained by adding a compound having a plurality of functional groups capable of substituting a P-S bond (in the above example, an -OH group of ethanol) contained in the electrolyte as an additive to link particles of the electrolyte. As described above, in the secondary battery according to the present aspect, a particle of the phosphorus-containing solid electrolyte is linked to another member via a bond containing one or more selected from the group consisting of a -P-O- bond, a -P-S- bond, and a - P-N- bond, and among these, a -P-O- bond is formed by substituting a P-S bond contained in the phosphorus-containing solid electrolyte with an -OH group contained in another member. In addition, a -P-S- bond is formed by substituting a P-S bond contained in the phosphorus-containing solid electrolyte with an -SH group contained in another member. Further, a -P-N- bond is formed by substituting a P-S bond contained in the phosphorus-containing solid electrolyte with an amino group (primary to tertiary amino groups, preferably a primary amino group) contained in another member.

Here, depending on the type of another member linked to a particle of the phosphorus-containing solid electrolyte, various types of combinations such as (1) linkage between a particle of the phosphorus-containing solid electrolyte and another particle of a phosphorus-containing solid electrolyte; (2) linkage between a particle of the phosphorus-containing solid electrolyte and the first conductive aid or the second conductive aid; (3) linkage between a particle of the phosphorus-containing solid electrolyte and the positive electrode current collector or the negative electrode current collector; (4) linkage between a particle of the phosphorus-containing solid electrolyte and the positive electrode active material or the negative electrode active material; and (5) linkage between a particle of the phosphorus-containing solid electrolyte and the negative electrode protecting layer are conceivable. Among these, a form, in which by adding a compound having a plurality of functional groups capable of substituting a P-S bond contained in the phosphorus-containing solid electrolyte as an additive, particles of the solid electrolyte are linked, corresponds to the above (1). In such an embodiment, examples of the "compound having a plurality of functional groups capable of substituting a P-S bond contained in the phosphorus-containing solid electrolyte" added as an additive include polyol compounds such as a diol, a triol, and a tetraol, polythiol compounds such as a dithiol, a trithiol, and a tetrathiol, polyamine compounds such as a diamine, a triamine, and a tetraamine, and the like. Above all, a diol, a triol, a dithiol, a trithiol, a diamine, or a triamine is preferable, and a diol, a dithiol, or a diamine is more preferable. When a polyol compound such as a diol (HO-(a divalent organic group)-OH), a polythiol compound such as a dithiol (HS-(a divalent organic group)-SH), or a polyamine compound such as a diamine (for example, H₂N-(a divalent organic group)-NH₂) is used as an additive, a P-S bond contained in the phosphorus-containing solid electrolyte is substituted with an -OH group, an -SH group, or an -NH₂ group contained in these additives. As a result, a particle of the phosphorus-containing solid electrolyte is linked to another particle of another phosphorus-containing solid electrolyte via a -P-O-(a divalent organic group)-O-P- bond, a -P-S-(a divalent organic group)-S-P- bond, or a -P-N-(a divalent organic group)-N-P- bond. Above all, a form in which a particle of the phosphorus-containing solid electrolyte is linked to another particle of another phosphorus-containing solid electrolyte via a -P-O-(a divalent organic group)-O-P- bond using a polyol compound such as a diol as an additive is preferable. Here, the "divalent organic group" contained in various additives described above is not particularly limited, and conventionally known knowledge can be referred to. Examples of the "divalent organic group" include a divalent aliphatic hydrocarbon group, a divalent alicyclic hydrocarbon group, and a divalent aromatic hydrocarbon group, which may be substituted. With such a configuration, it is possible to constitute the secondary battery according to the present aspect using an easily available material as an additive while the occurrence of a side reaction other than the above-mentioned reaction is prevented.

Examples of the divalent aliphatic hydrocarbon group which may be substituted include an alkylene group which may be substituted, and the like. Examples of the divalent alicyclic hydrocarbon group which may be substituted include a cycloalkylene group which may be substituted, and the like. Examples of the divalent aromatic hydrocarbon group which may be substituted include an arylene group which may have a substituent, and the like. Examples of the alkylene group include a methylene group, an ethylene group, a propylene group, a butylene group, a pentylene group, a hexylene group, a heptylene group, an octylene group, a nonylene group, a decylene group, and the like. The alkylene group may be substituted, and examples of the substituent include branched structures such as a methyl group and an ethyl group; an alkenyl group; an alkynyl group; an aryl group; a heteroaromatic ring group; an alkoxy group; an arylthio group; a trisubstituted silyloxy group; an acyloxy group; an alkoxycarbonyl group; an arylsulfinyl group; a sulfonate ester group; an amino group; a hydroxy group; a cyano group; a nitro group; a halogen atom, and the like. In addition, as in a polyoxyalkylene group, a hetero atom such as an oxygen atom, a nitrogen atom, or a sulfur atom may be interposed between carbon atoms constituting an alkylene group. Examples of the cycloalkylene group include a cyclopropylene group, a cyclobutylene group, a cyclopentylene group, a cyclohexylene group, and the like. These cycloalkylene groups may be substituted with substituents similar to those described above. Examples of the arylene group include a phenylene group, a naphthylene group, an anthrylene group, a phenanthrylene group, a fluorenylene group, and the like. These arylene groups may be substituted with substituents similar to those described above. Above all, the above-mentioned "divalent organic group" is preferably an aliphatic hydrocarbon group which may be substituted, more preferably an alkylene group which may be substituted, and still more preferably a polyol residue derived from one or more polyols selected from the group consisting of ethanediol, n-butanediol, 1,2,4-n-butanetriol, (poly)ethylene glycol, polycaprolactone diol, and a polyethylene-vinyl alcohol copolymer. The "polyol residue derived from a polyol" means a group in which two hydroxy groups contained in a polyol are eliminated.

As described above, by the incorporation of such an additive together with the phosphorus-containing solid electrolyte, a particle of the phosphorus-containing solid electrolyte is linked to another particle of another phosphorus-containing solid electrolyte via a bond corresponding to the structure of the additive. Here, the addition amount of the additive is not particularly limited, but is preferably 0.1 to 10% by mass, more preferably 0.3 to 5% by mass, and still more preferably 0.5 to 3% by mass with respect to 100% by mass of the content of the phosphorus-containing solid electrolyte in the layer containing the phosphorus-containing solid electrolyte.

Hereinabove, the type (1) (that is, the particles of the phosphorus-containing solid electrolyte are linked to each other using an additive) among the above-mentioned types has been described in detail. Here, in the type (2), for example, a particle of a metal oxide or a carbon material having a functional group such as an -OH group on the surface is used as the first conductive aid or the second conductive aid, so that linkage between a particle of the phosphorus-containing solid electrolyte and the first conductive aid or the second conductive aid can be achieved. Further, in the type (3), a metal foil having a functional group such as an -OH group on the surface is used as the positive electrode current collector or the negative electrode current collector, so that linkage between a particle of the phosphorus-containing solid electrolyte and the positive electrode current collector or the negative electrode current collector can be achieved. Further, in the type (4), a particle of a metal oxide or a carbon material having a functional group such as an -OH group on the surface is used as the positive electrode active material or the negative electrode active material, so that linkage between a particle of the phosphorus-containing solid electrolyte and the positive electrode current collector or the negative electrode current collector can be achieved. Further, in the type (5), a particle (preferably a nanoparticle) of a metal oxide or a carbon material having a functional group such as an -OH group on the surface is used as the constituent material of the negative electrode protecting layer, so that linkage between a particle of the phosphorus-containing solid electrolyte and the negative electrode protecting layer can be achieved.

In the secondary battery according to the present aspect, when a particle of the phosphorus-containing solid electrolyte is linked to another member via a -P-O- bond, a peak at 70 to 80 ppm derived from a phosphate ester bond (-P-O- bond) is observed when a site where the particle of the phosphorus-containing solid electrolyte is linked is observed by solid ³¹P-NMR. Further, when a site where a particle of the phosphorus-containing solid electrolyte is linked is observed by ¹H-NMR, it is preferable that a peak at 1 to 2 ppm derived from a methyl group in an alkyl group is not observed. This is because the presence of the peak indicates that although a P-S bond contained in the phosphorus-containing solid electrolyte is substituted with a -P-O- bond, the end of the bond is not linked to another member, in other words, the presence of a -P-O- bond does not contribute to the expression of the above-mentioned operational effect.

Hereinabove, one embodiment of the secondary battery has been described, but the present invention is not limited only to the configuration described in the above-mentioned embodiment, and can be appropriately changed based on the description of the claims. For example, the secondary battery according to the present invention may not be an all-solid-state secondary battery. That is, the solid electrolyte layer may further contain a conventionally known liquid electrolyte (electrolyte solution). The amount of the liquid electrolyte (electrolyte solution) that can be contained in the solid electrolyte layer is not particularly limited, but is preferably such an amount that the shape of the solid electrolyte layer formed from the solid electrolyte is maintained and liquid leakage of the liquid electrolyte (electrolyte solution) does not occur.

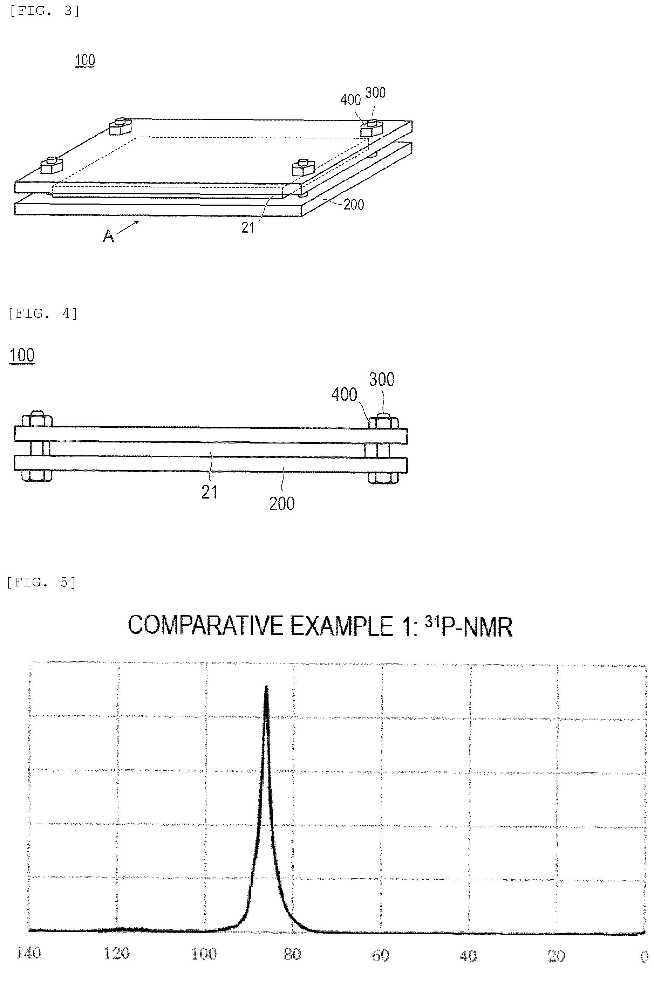

The secondary battery according to an aspect of the present invention described above is preferably in a state of being pressurized in the laminating direction of the power generating element during operation thereof. Therefore, the secondary battery according to an aspect of the present invention preferably further includes a pressurizing member that pressurizes the power generating element in the laminating direction. Fig. 3 is a perspective view of a laminate type secondary battery according to an embodiment of the present invention. Fig. 4 is a side view as viewed from direction A illustrated in Fig. 3. As illustrated in Figs. 3 and 4, a laminate type secondary battery 100 according to the present embodiment includes a power generating element 21 sealed in a laminate film 29 illustrated in Fig. 1, two metal plates 200 sandwiching the power generating element 21 sealed in the laminate film 29, and a bolt 300 and a nut 400 as fastening members. The fastening members (bolt 300 and nut 400) have a function of fixing the power generating element 21 sealed in the laminate film 29 in a state where the metal plates 200 sandwich the power generating element 21. As a result, the metal plates 200 and the fastening members (bolt 300 and nut 400) function as pressurizing members that pressurize (restrain) the power generating element 21 in the laminating direction. The pressurizing members are not particularly limited as long as the pressurizing members can pressurize the power generating element 21 in the laminating direction. Typically, a combination of plates formed of a material having rigidity like the metal plates 200 and the above-mentioned fastening members are used as the pressurizing members. Further, as the fastening members, not only the bolt 300 and the nut 400, but also a tension plate or the like that fixes the end of the metal plate 200 so as to restrain the power generating element 21 in the laminating direction may be used.

The lower limit of a load (a restraining pressure in the laminating direction of the power generating element) applied to the power generating element 21 is, for example, 0.1 MPa or more, preferably 1 MPa or more, more preferably 3 MPa or more, and still more preferably 5 MPa or more. The upper limit of the restraining pressure in the laminating direction of the power generating element is, for example, 100 MPa or less, preferably 70 MPa or less, more preferably 40 MPa or less, and still more preferably 10 MPa or less.

### Examples

Hereinafter, the present invention will be described in more detail with reference to examples. However, the technical scope of the present invention is not limited only to the following examples. The following operation was performed inside an argon glove box (23°C, moisture content: 0.1 ppm or less, oxygen concentration: 10 ppm or less) having a dew point of -70°C or lower.

### <<Production example of evaluation cell: effect of adding additive to positive electrode active material layer>>

### [Comparative Example 1]

First, 50 parts by mass of sulfur which is a positive electrode active material, 30 parts by mass of acetylene black (AB) which is a conductive aid, and 20 parts by mass of LPSCl (Li₆PS₅Cl; Li⁺ is contained as a cation, and PS₄³⁻ is contained as an anion) which is an argyrodite-type sulfide solid electrolyte were weighed and mixed in an agate mortar, and then further mixed and stirred using a planetary ball mill. To 1000 by mass of the resulting mixed powder, 2% by mass of styrene-butadiene rubber (SBR) was added, and xylene was added thereto as a solvent to prepare a positive electrode active material slurry. The positive electrode active material slurry was applied onto the surface of an aluminum foil which is a positive electrode current collector and dried to produce a positive electrode active material layer.

Then, the same LPSCl and SBR as described above were mixed at a mass ratio of 98 : 2, and xylene was added thereto as a solvent to prepare a solid electrolyte slurry. This solid electrolyte slurry was applied to the exposed surface of the positive electrode active material layer produced above, and dried to produce a solid electrolyte layer.

The laminate obtained as described above was cut out so that the coating size of the positive electrode active material layer was 2.5 cm long × 2.0 cm wide. Subsequently, a negative electrode in which a metallic lithium-indium foil having the same dimension and a nickel foil which is a negative electrode current collector were superposed was pasted to the laminate cut out above, and pressure-bonded by applying a predetermined pressure. Pasting was performed in a direction where the solid electrolyte layer and the Li foil were in contact. Then, a tab lead made of aluminum and a tab lead made of nickel were welded to the aluminum foil and the nickel foil, respectively. These were sandwiched and sealed with an aluminum laminate film to produce an evaluation cell.

### [Comparative Example 2]

In the preparation of a positive electrode active material slurry, 50 parts by mass of sulfur which is a positive electrode active material, 29 parts by mass of acetylene black which is a conductive aid, and 20 parts by mass of LPSCl (Li₇P₃S₁₁) which is a sulfide solid electrolyte were weighed and mixed in an agate mortar, and then 1 part by mass of ethanol as an additive was further added thereto and mixed in the agate mortar. An evaluation cell was produced in the same manner as in Comparative Example 1 described above except that this was subjected to mixing and stirring using a planetary ball mill.

### [Example 1]

In the preparation of a positive electrode active material slurry, 50 parts by mass of sulfur which is a positive electrode active material, 29.9 parts by mass of acetylene black which is a conductive aid, and 20 parts by mass of LPSCl (Li₇P₃S₁₁) which is a sulfide solid electrolyte were weighed and mixed in an agate mortar, and then 0.1 parts by mass of 1,2-ethanediol as an additive was further added thereto and mixed in the agate mortar. An evaluation cell was produced in the same manner as in Comparative Example 1 described above except that this was subjected to mixing and stirring using a planetary ball mill.

### [Example 2]

An evaluation cell was produced in the same manner as in Example 1 described above except that the amounts of acetylene black and ethanediol used were changed to 29 parts by mass and 1 part by mass, respectively.

### [Example 3]

An evaluation cell was produced in the same manner as in Example 2 described above except that 1,4-butanediol was used in place of ethanediol.

### [Example 4]

An evaluation cell was produced in the same manner as in Example 2 described above except that 1,2,4-butanetriol was used in place of ethanediol.

### [Example 5]

An evaluation cell was produced in the same manner as in Example 2 described above except that polyethylene glycol having a molecular weight of 400 was used in place of ethanediol.

### [Example 6]

An evaluation cell was produced in the same manner as in Example 2 described above except that polycaprolactone diol having a molecular weight of 530 was used in place of ethanediol.

### [Example 7]

An evaluation cell was produced in the same manner as in Example 2 described above except that a polyethylene-vinyl alcohol copolymer having a weight average molecular weight (Mw) of 100,000 was used in place of ethanediol.

### <<Measurement of internal resistance after charge-discharge treatment of evaluation cell>>

The internal resistance after a charge-discharge treatment was measured for the evaluation cells produced in the respective Comparative Examples and Examples described above. Specifically, first, each evaluation cell was sandwiched between two SUS plates having a thickness of 5 mm, and pressurized using a flat press machine via a hydraulic jack so that the fastening pressure was 1000 kgf/cm². After 1 hour elapsed from the start of pressurization, the evaluation cell in a pressurized state was placed inside a thermostatic bath set to 25°C, connected to a charge-discharge apparatus, and subjected to a charge-discharge test to measure a charge-discharge capacity. As charge-discharge conditions, first, in the discharging process, a current corresponding to 0.05 C was applied, and constant current-constant voltage discharging at a lower limit voltage of 0.6 V was performed. This discharging process was performed until the current value became equivalent to 0.01 C or 40 hours elapsed from the start of discharging. After completion of the discharging, the battery was left for 1 hour, and then charged. Also in the charging process, a current corresponding to 0.05 C was applied until the upper limit voltage reached 2.5 V, and after the voltage reached, the battery was charged until the current value became equivalent to 0.01 C or 40 hours elapsed from the start of charging, and then left for 1 hour. After 3 cycles of these discharge-charge cycles were performed, the cell in a charged state was discharged at a constant current so that SOC was 50%, and left for 1 hour. Thereafter, the amount of voltage drop when a discharge current corresponding to 0.05 C was allowed to flow for 10 seconds was measured, and the internal resistance of the battery was calculated from the current value and the amount of voltage drop at that time. The results are shown in Table 1 below. The value of the internal resistance shown in Table 1 is a relative value when the value of the internal resistance of Comparative Example 1 is taken as 100. Further, Table 1 also shows the composition of the positive electrode active material layer, but the composition shown in Table 1 does not include the amount of SBR which is a binder.

### <<NMR measurement of positive electrode active material layer>>

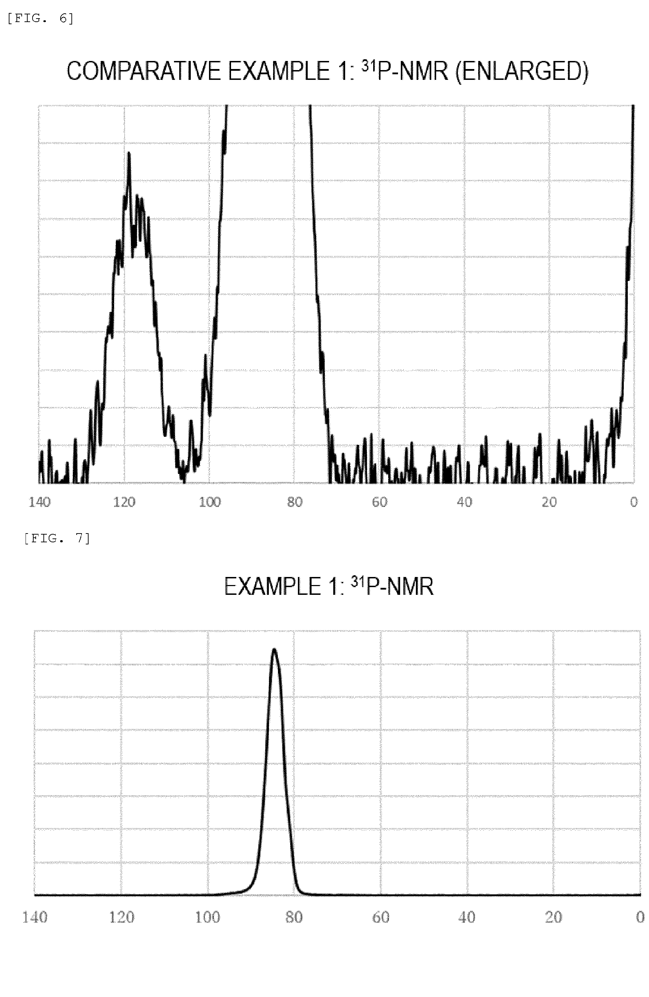

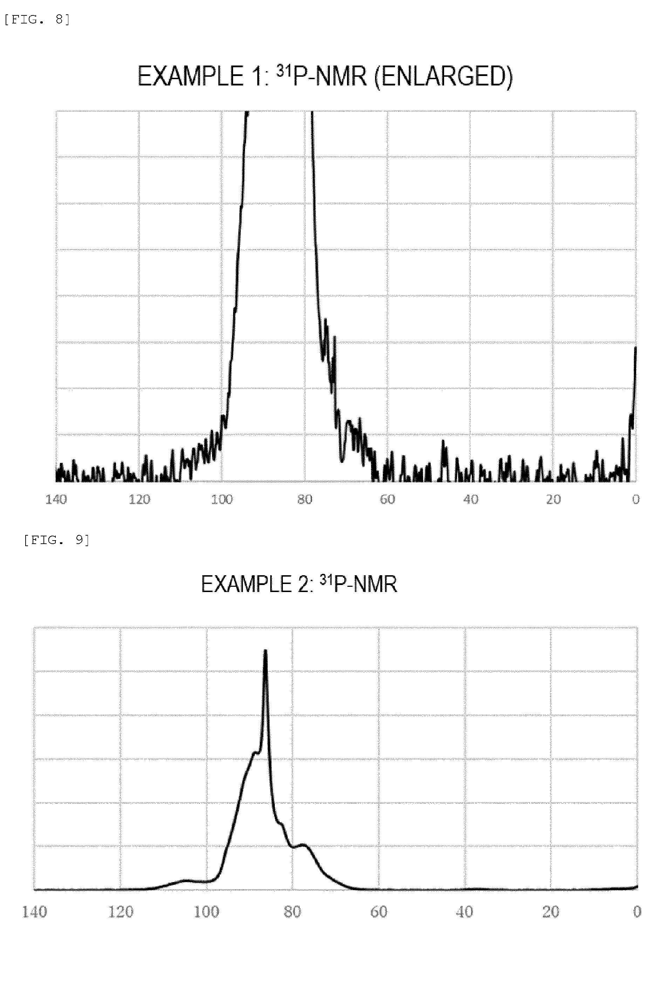

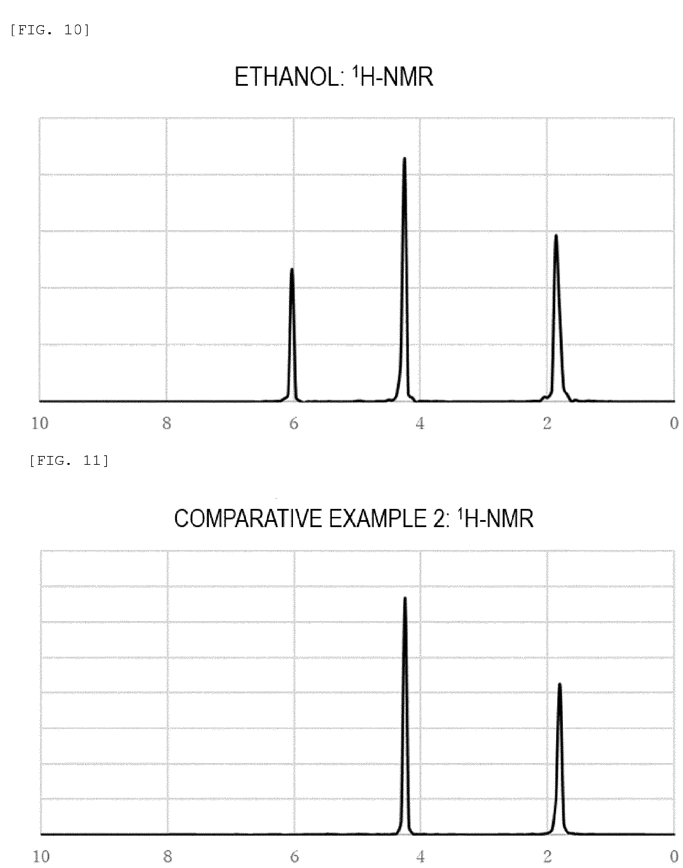

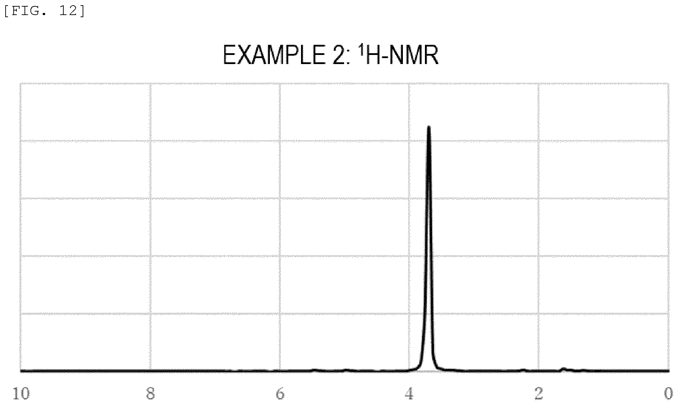

Each of the evaluation cells produced in Comparative Example 1 and Examples 1 and 2 was disassembled to take out the positive electrode active material layer, which was subjected to solid ³¹P-NMR measurement and ¹H-NMR measurement under the following conditions. A solid ³¹P-NMR spectrum of the positive electrode active material layer of Comparative Example 1 and an enlarged view thereof are shown in Fig. 5 and Fig. 6, respectively. A solid ³¹P-NMR spectrum of the positive electrode active material layer of Example 1 and an enlarged view thereof are shown in Fig. 7 and Fig. 8, respectively. A solid ³¹P-NMR spectrum of the positive electrode active material layer of Example 2 is shown in Fig. 9. In addition, a ¹H-NMR spectrum of ethanol is shown in Fig. 10, and ¹H-NMR spectra of the positive electrode active material layers of Comparative Example 2 and Example 2 are shown in Fig. 11 and Fig. 12, respectively.

### (Solid ³¹P-NMR measurement)

The positive electrode active material layer was lightly crushed into a powder form, and the powder was sealed in a solid NMR sample tube in a glove box in an argon atmosphere, and a solid ³¹P-NMR spectrum was measured. At this time, a 85% by mass phosphoric acid aqueous solution (0 ppm) was used as a chemical shift standard. In addition, ³¹P MAS NMR spectrum measurement was performed using Agilent NMR System 400WB as a measuring apparatus. As for measurement conditions, the measurement was performed at an observation frequency of 162.13 MHz, a MAS rotation speed of 14 kHz, a pulse width of 2 microseconds, a waiting time between pulses of 190 seconds, and an integration count of 32 times.

### (¹H-NMR measurement)

The positive electrode active material layer was lightly crushed into a powder form, and the powder was sealed in an NMR measurement tube in a glove box in an argon atmosphere, and a ¹H-NMR spectrum was measured. At this time, TSP (sodium [2,2,3,3-D4]3-3-(trimethylsilyl)propanoate) (0 ppm) was used as a chemical shift standard. In addition, ¹H-NMR spectrum measurement was performed using Bruker AVANCE III 600 as a measuring apparatus. As for measurement conditions, the measurement was performed at an observation frequency of 600.13 MHz and an integration count of 4 times.

**[Table 1]**

| | Positive electrode active material layer | | | | | Internal resistance after 3 cycles (relative value) |
|---|---|---|---|---|---|---|
| | Composition [parts by mass] | | | | Type of additive | |
| | Sulfur | LPSCl | AB | Additive | | |
| Comparative Example 1 | 50 | 30 | 20 | - | - | 100 |
| Comparative Example 2 | 50 | 29 | 20 | 1 | Ethanol | 112 |
| Example 1 | 50 | 29.9 | 20 | 0.1 | 1,2-ethanediol | 91 |
| Example 2 | 50 | 29 | 20 | 1 | 1,2-ethanediol | 75 |
| Example 3 | 50 | 29 | 20 | 1 | 1,4-butanediol | 72 |
| Example 4 | 50 | 29 | 20 | 1 | 1,2,4-butanetriol | 83 |
| Example 5 | 50 | 29 | 20 | 1 | Polyethylene glycol (molecular weight: 400) | 78 |
| Example 6 | 50 | 29 | 20 | 1 | Polycaprolactone diol (molecular weight: 530) | 74 |
| Example 7 | 50 | 29 | 20 | 1 | Polyethylene-vinyl alcohol copolymer (Mw 100,000) | 92 |

From the results shown in Table 1, it is found that in Example 1 to 7 in which a polyol was added as an additive to the positive electrode active material layer, the internal resistance value of the battery remarkably decreased as compared with Comparative Example 1 in which no additive was added and Comparative Example 2 in which a monool (ethanol) was added as an additive.

Here, as shown in Figs. 7 to 9, in the solid ³¹P-NMR spectra of the positive electrode active material layers of Example 1 and Example 2, a peak at 70 to 80 ppm derived from a phosphate ester bond (-P-O- bond) was observed. On the other hand, as shown in Figs. 5 and 6, in the solid ³¹P-NMR spectrum of the positive electrode active material layer of Comparative Example 1, a peak at 70 to 80 ppm derived from a phosphate ester bond (-P-O- bond) was not observed. Further, as shown in Fig. 12, in the ¹H-NMR spectrum of the positive electrode active material layer of Example 2, a peak at 1 to 2 ppm derived from a methyl group in an alkyl group as observed in the ¹H-NMR spectrum of ethanol (Fig. 10) was not observed. On the other hand, as shown in Fig. 11, in the ¹H-NMR spectrum of the positive electrode active material layer of Comparative Example 2, the peak at 1 to 2 ppm was observed.

From these results, it is considered that in Example 1 and Examples 2 to 7, by adding a polyol as an additive to the positive electrode active material layer, a P-S bond of PS₄³⁻ anion in the solid electrolyte (LiP₆S₅Cl) contained in the positive electrode active material layer was substituted with a hydroxy group of the polyol, and as a result, particles of the solid electrolyte were crosslinked via the polyol residue. Then, it is considered that the formation of such a crosslinked structure prevents peeling between the particles of the solid electrolyte or relieves stress caused by expansion and contraction of active material particles by the flexible crosslinked structure, thereby preventing an increase in internal resistance of the battery.

### <<Production example of evaluation cell: effect of adding additive to solid electrolyte layer>>

### [Example 8]

In the preparation of a solid electrolyte slurry, LPSCl and 1,2-ethanediol were mixed at a mass ratio of 99 : 1, 2% by mass of SBR was added to 100% by mass of the resulting mixed powder, and xylene was added thereto as a solvent to prepare a solid electrolyte slurry. An evaluation cell was produced in the same manner as in Comparative Example 1 described above except that a solid electrolyte layer was produced using this solid electrolyte slurry.

### [Example 9]

In the preparation of a solid electrolyte slurry, LPSCl and 1,2-ethanediol were mixed at a mass ratio of 99 : 1, 2% by mass of SBR was added to 100% by mass of the resulting mixed powder, and xylene was added thereto as a solvent to prepare a solid electrolyte slurry. An evaluation cell was produced in the same manner as in Example 2 described above except that a solid electrolyte layer was produced using this solid electrolyte slurry.

### [Example 10]

An evaluation cell was produced in the same manner as in Example 8 described above except that 1,4-butanediol was used in place of ethanediol.

### <<Measurement of internal resistance after charge-discharge treatment of evaluation cell>>

The internal resistance after a charge-discharge treatment was measured in the same manner as described above for the evaluation cells produced in Example 8 to Example 10 described above. The results are shown in Table 2 below. Table 2 also shows the results of Comparative Example 1 and Example 2, and the value of the internal resistance shown in Table 2 is a relative value when the value of the internal resistance of Comparative Example 1 is taken as 100. Further, Table 2 also shows the compositions of the positive electrode active material layer and the solid electrolyte layer, but the compositions shown in Table 2 do not include the amount of SBR which is a binder.

**[Table 2]**

| | Composition of positive electrode active material layer [parts by mass] | | | | Composition of solid electrolyte layer [parts by mass] | | Type of additive | Internal Iresistance after 3 cycles (relative value) |
|---|---|---|---|---|---|---|---|---|
| | Sulfur | LPSCl | AB | Additive | LPSCl | Additive | | |
| Comparative Example 1 | 50 | 30 | 20 | - | 100 | - | - | 100 |
| Example 2 | 50 | 29 | 20 | 1 | 100 | - | 1,2-ethanediol | 75 |
| Example 8 | 50 | 30 | 20 | - | 99 | 1 | 1,2-ethanediol | 95 |
| Example 9 | 50 | 29 | 20 | 1 | 99 | 1 | 1,2-ethanediol | 72 |
| Example 10 | 50 | 39 | 20 | - | 99 | 1 | 1,4-butanediol | 94 |

From the results shown in Table 2, it is found that even when a polyol is added as an additive to the solid electrolyte layer in place of the positive electrode active material layer, an increase in internal resistance of the battery can be prevented in the same manner (Example 8, Example 10). It is also found that when a polyol is added as an additive also to the solid electrolyte layer in addition to the positive electrode active material layer, the internal resistance of the battery can be further reduced (Example 9).

### <<Production example of evaluation cell: effect of adding additive to negative electrode active material layer>>

### [Comparative Example 3]

First, 80 parts by mass of a lithium-transition metal composite oxide (LiNi_{0.5}Mn_{0.3}Co_{0.2}O₂) (NMC) which is a positive electrode active material, 15 parts by mass of LPSCl (Li₆PS₅Cl; Li⁺ is contained as a cation, and PS₄³⁻ is contained as an anion) which is an argyrodite-type sulfide solid electrolyte, and 5 parts by mass of acetylene black which is a conductive aid were weighed and mixed by a defoaming kneader. To 100% by mass of the resulting mixed powder, 2% by mass of styrene-butadiene rubber (SBR) was added, and xylene was added thereto as a solvent to prepare a positive electrode active material slurry. The positive electrode active material slurry was applied onto the surface of an aluminum foil which is a positive electrode current collector and dried to produce a positive electrode active material layer.

Then, the same LPSCl and SBR as described above were mixed at a mass ratio of 98 : 2, and xylene was added thereto as a solvent to prepare a solid electrolyte slurry. This solid electrolyte slurry was applied to the exposed surface of the positive electrode active material layer produced above, and dried to produce a solid electrolyte layer. The laminate obtained in this manner was cut out so that the coating size of the positive electrode active material layer was 2.5 cm long × 2.0 cm wide.

On the other hand, 80 parts by mass of graphite which is a negative electrode active material and 20 parts by mass of the same LPSCl as described above were weighed and mixed by a defoaming kneader. To 100% by mass of the resulting mixed powder, 2% by mass of SBR was added, and xylene was added thereto as a solvent to prepare a negative electrode active material slurry. The negative electrode active material slurry was applied to a stainless steel (SUS 304) foil which is a negative electrode current collector and dried to form a negative electrode active material layer.

Thereafter, the laminate of the negative electrode active material layer/the negative electrode current collector cut out to the same dimension was pasted to the exposed surface of the solid electrolyte layer produced above, and pressure-bonded by applying a predetermined pressure. Pasting was performed in a direction where the solid electrolyte layer, the negative electrode active material layer, and the foil were in contact. Then, a tab lead made of aluminum and a tab lead made of nickel were welded to the aluminum foil and the stainless steel foil, respectively. These were sandwiched and sealed with an aluminum laminate film to produce an evaluation cell.

### [Example 11]

In the preparation of a negative electrode active material slurry, 80 parts by mass of graphite which is a negative electrode active material and 19 parts by mass of the same LPSCl as described above were weighed and mixed by a defoaming kneader, and then 1 part by mass of 1,2-ethanediol was further added thereto as an additive and mixed. To 100% by mass of the resulting mixed powder, 2% by mass of SBR was added, and xylene was added thereto as a solvent to prepare a negative electrode active material slurry. An evaluation cell was produced in the same manner as in Comparative Example 3 described above except that a negative electrode active material layer was formed using this negative electrode active material slurry.

### [Example 12]

In the preparation of a positive electrode active material slurry, 80 parts by mass of a lithium-transition metal composite oxide (LiNi_{0.5}Mn_{0.3}Co_{0.2}O₂) which is a positive electrode active material, 14 parts by mass of LPSCl (Li₆PS₅Cl; Li⁺ is contained as a cation, and PS₄³⁻ is contained as an anion) which is an argyrodite-type sulfide solid electrolyte, and 5 parts by mass of acetylene black which is a conductive aid were weighed and mixed by a defoaming kneader, and then 1 part by mass of 1,2-ethanediol was further added thereto as an additive and mixed. To 100% by mass of the resulting mixed powder, 2% by mass of styrene-butadiene rubber (SBR) was added, and xylene was added thereto as a solvent to prepare a positive electrode active material slurry. An evaluation cell was produced in the same manner as in Example 11 described above except that a positive electrode active material layer was formed using this positive electrode active material slurry.

### <<Measurement of internal resistance after charge-discharge treatment of evaluation cell>>

The internal resistance after a charge-discharge treatment was measured in the same manner as described above for the evaluation cells produced in Comparative Example 3 and Examples 11 and 12 described above. The results are shown in Table 3 below. The value of the internal resistance shown in Table 3 is a relative value when the value of the internal resistance of Comparative Example 3 is taken as 100. Further, Table 3 also shows the compositions of the positive electrode active material layer and the negative electrode active material layer, but the compositions shown in Table 3 do not include the amount of SBR which is a binder.

**[Table 3]**

| | Composition of positive electrode active material layer [parts by mass] | | | | Composition of negative electrode active material layer [parts by mass] | | | Type of additive | Internal resistance after 3 cycles (relative value) |
|---|---|---|---|---|---|---|---|---|---|
| | NMC | LPSCl | AB | Additive | Graphite | LPSCl | Additive | | |
| Comparative Example 3 | 80 | 15 | 5 | - | 80 | 20 | - | - | 100 |
| Example 11 | 80 | 15 | 5 | - | 80 | 19 | 1 | 1,2-ethanediol | 77 |
| Example 12 | 80 | 14 | 5 | 1 | 80 | 19 | 1 | 1,2-ethanediol | 71 |

From the results shown in Table 3, it is found that even in an all-solid-state lithium secondary battery in which a lithium-transition metal composite oxide is used as the positive electrode active material and graphite is used as the negative electrode active material, when a polyol is added as an additive to the negative electrode active material layer (further, the positive electrode active material layer in addition to this) together with the solid electrolyte, an increase in internal resistance of the battery can be prevented in the same manner.

### Reference Signs List

- 10a, 100: Laminate type battery
- 11': Negative electrode current collector
- 11": Positive electrode current collector
- 13: Negative electrode active material layer
- 15: Positive electrode active material layer
- 17: Solid electrolyte layer
- 19: Single battery layer
- 21: Power generating element
- 25: Negative electrode current collecting plate
- 27: Positive electrode current collecting plate
- 29: Laminate film
- 200: Metal plate
- 300: Bolt
- 400: Nut

## Claims

1. A secondary battery, comprising a power generating element formed by laminating
a positive electrode active material layer that is disposed on a surface of a positive electrode current collector and that contains a positive electrode active material and optionally a first conductive aid,
a negative electrode active material layer that is disposed on a surface of a negative electrode current collector and that contains a negative electrode active material and optionally a second conductive aid,
a solid electrolyte layer interposed between the positive electrode active material layer and the negative electrode active material layer, and
a negative electrode protecting layer that is optionally disposed and that is interposed between the solid electrolyte layer and the negative electrode active material layer, wherein
the positive electrode active material layer, the solid electrolyte layer, or the negative electrode active material layer contains a phosphorus-containing solid electrolyte containing Li element, P element, and S element, and
a particle of the phosphorus-containing solid electrolyte is linked to one or more selected from a group consisting of another particle of a phosphorus-containing solid electrolyte, the first conductive aid, the second conductive aid, the positive electrode current collector, the negative electrode current collector, the positive electrode active material, the negative electrode active material, and the negative electrode protecting layer via a bond containing one or more selected from a group consisting of a -P-O- bond, a -P-S- bond, and a -P-N- bond.

2. The secondary battery according to claim 1, wherein the phosphorus-containing solid electrolyte contains a lithium ion (Li⁺) as a cation, and contains PS₄³⁻, P₂S₇⁴⁻, or P₂S₆³⁻ as an anion.

3. The secondary battery according to claim 1 or 2, wherein the particle of the phosphorus-containing solid electrolyte is linked to another particle of another phosphorus-containing solid electrolyte via a -P-O-(a divalent organic group)-O-P- bond, a -P-S-(a divalent organic group)-S-P- bond, or a -P-N-(a divalent organic group)-N-P- bond.

4. The secondary battery according to any one of claims 1 to 3, wherein the particle of the phosphorus-containing solid electrolyte is linked to another particle of another phosphorus-containing solid electrolyte via a -P-O-(a divalent organic group)-O-P- bond, and a divalent organic group in the -P-O-(a divalent organic group)-O-P- bond contains a divalent aliphatic hydrocarbon group, a divalent alicyclic hydrocarbon group, or a divalent aromatic hydrocarbon group, which may be substituted.

5. The secondary battery according to claim 4, wherein the divalent organic group contains a polyol residue derived from one or more polyols selected from a group consisting of ethanediol, n-butanediol, 1,2,4-n-butanetriol, (poly)ethylene glycol, polycaprolactone diol, and a polyethylene-vinyl alcohol copolymer.

6. The secondary battery according to any one of claims 1 to 5, wherein a peak at 70 to 80 ppm derived from a phosphate ester bond (-P-O-bond) is observed when a site where the particle of the phosphorus-containing solid electrolyte is linked is observed by solid ³¹P-NMR, and a peak at 1 to 2 ppm derived from a methyl group in an alkyl group is not observed when the site is observed by ¹H-NMR.

7. The secondary battery according to any one of claims 1 to 6, which is an all-solid-state lithium secondary battery.
